# EUROPÄISCHE PATENTANMELDUNG

(11) **EP 1 329 966 A2**
(43) Veröffentlichungstag der Anmeldung: **23.07.2003**
(21) Anmeldenummer: 02027977.4
(22) Anmeldetag: 13.12.2002
(51) Int. Cl.: H01M 2/20

(54) **Verfahren und Vorrichtung für das Vorsehen von elektrischen Kontakten für Stromversorgungszellen**

(30) Priorität: 21.12.2001 DE 10163531
(71) Anmelder: SIEMENS AKTIENGESELLSCHAFT, 80333 München (DE)
(72) Erfinder: Elting, Ralf, 46499 Hamminkeln (DE); Herrmann, Stephan, 46244 Bottrop (DE)

(57) **Zusammenfassung**

Zur Verkürzung der Montagezeit von elektrotechnischen Geräten, wie z.B. ein Mobilfunktelefon, das Stromversorgungszellen hat, die elektrische Kontakte benötigt, wie z.B. eine Überbrückungsfeder (4) für die Überbrückung von hintereinander geschalteter Stromversorgungszellen oder Ladekontaktfedern (6; 7) zum Laden der Stromversorgungszellen, falls diese durch Akkumulatoren gebildet sind, wird ein Verfahren vorgeschlagen, nach dem die Überbrückungsfeder (4) und die wenigstens eine Ladekontaktfeder (6; 7) zu einem unabhängigen frühzeitigen Zeitpunkt auf einen Halter (5) montiert werden, der dann zu einem gegebenen Zeitpunkt mit einem einzigen Setzvorgang statt mit Setzvorgängen für ein jeweiliges einzelnes benötigtes Teil montiert wird. Ferner wird ein Modul (8) vorgeschlagen, das die benötigten Teile zum Beispiel auf einen Halter (5) aufgeschnappt hat und das mit einem einzigen Setzvorgang montierbar ist.

## Beschreibung

Verfahren und Vorrichtung für das Vorsehen von elektrischen Kontakten für Stromversorgungszellen

Die Erfindung betrifft ein Verfahren und eine Vorrichtung für das Vorsehen von elektrischen Kontakten für Stromversorgungszellen gemäß jeweils einem der Oberbegriffe der Ansprüche 1 bzw. 3.

In der Produktion von elektrotechnischen Geräten, beispielsweise solchen, die mit Stromversorgungszellen betrieben werden, ist die Anzahl der Setzvorgänge für das Montieren größerer und großer Bauelemente ein zeitkritischer Umstand, das heißt, die Anzahl der Setzvorgänge bestimmt maßgeblich die Montagezeit für das Gerät. Ziel bei solchen Montagen ist es, die Zeit für die Montage eines einzelnen Gerätes möglichst kurz zu halten.

Als Stromversorgungszellen werden heute nicht nur Batterien verwendet, sondern zunehmend auch Akkumulatoren, für die zusätzlich die Möglichkeit bestehen soll, dass sie im Gerät selbst nachgeladen werden können. Damit die Akkumulatoren im Gerät nachgeladen werden können, ist das elektrotechnische Gerät mit Ladekontakten ausgerüstet, für die zur Zeit jeweilig ein eigener Setzvorgang durchgeführt werden muss. Hinzu kommt, dass die Stromversorgungszellen, unabhängig davon, ob es sich hierbei um Batterien oder Akkumulatoren handelt, eine solche Art von elektrischen Kontakten beanspruchen, die eine Überbrückung zwischen hintereinander geschalteten Stromversorgungszellen bewerkstelligen. Diese Art von elektrischen Kontakten wird beispielsweise mit einer Überbrückungsfeder realisiert, die ihrerseits einen eigenen Setzvorgang bei der Montage des vorliegenden elektrotechnischen Gerätes beansprucht.

Als elektrotechnisches Gerät kann beispielsweise eine mobile Kommunikationsendeinrichtung wie z.B. ein Mobiltelefon betroffen sein.

Aufgabe der vorliegenden Erfindung ist es, ein Verfahren und eine Vorrichtung für das Vorsehen von elektrischen Kontakten für die Stromversorgungszellen von mit Stromversorgungszellen betriebener elektrotechnischer Geräte anzugeben, durch das bzw. durch die die Montagezeit für die Montage des einzelnen betreffenden elektrotechnischen Gerätes besonders kurz gehalten werden kann.

Diese Aufgabe wird für das Verfahren durch die Merkmale des Anspruchs 1 gelöst. Bezüglich der Vorrichtung wird diese Aufgabe durch die Merkmale des Anspruchs 3 gelöst.

Danach wird eine Überbrückungsfeder und wenigstens eine Ladekontaktfeder, im Normalfall jedoch jeweils zwei Ladekontaktfedern, auf einen Halter montiert, der dann als eine einzige Einheit in einem einzigen Setzvorgang innerhalb eines Hauptmontageablaufes bei der Montage eines betreffenden Gerätes in das elektrotechnische Gerät montiert wird. Damit wird für die Montage einer Überbrückungsfeder und in der Regel für zwei Ladekontaktfedern statt der Zeit für in der Regel drei Setzvorgänge nur mehr die Zeit für einen einzigen Setzvorgang benötigt. Zwei Drittel der bisher benötigten Zeit für die Montage dieser elektrischen Kontakte wird daher pro einzelnes Gerät eingespart.

Die Zeiteinsparung ist deshalb möglich, weil die Montage der Überbrückungsfeder und der in der Regel zweifach vorhandenen Ladekontaktfedern entweder in einem frühzeitigen parallelen Montageablauf zum eigentlichen Montageablauf des betreffenden Gerätes durchgeführt werden kann oder weil die entsprechende bereits zusammengefügte Komponente schon als fertiges Teil angeliefert ist.

Die Bereitstellung eines Modules, das eine Überbrückungsfeder und in der Regel 2 Ladekontaktfedern auf einem Halter beinhaltet, stellt eine Vorrichtung für das Vorsehen von entsprechenden elektrischen Kontakten für die Stromversorgungszellen eines betreffenden elektrotechnischen Gerätes dar, mit der bei der Montage des besagten elektrotechnischen Gerätes, wie bezüglich des Verfahrens schon näher dargelegt, Zeit eingespart werden kann. Die Zeit kann deshalb eingespart werden, weil für die Montage dieses Teiles nur ein einziger Setzvorgang benötigt wird, damit aber gleichzeitig z.B. drei Teile montiert werden.

Vorteilhafte Ausgestaltungen der Erfindung sind Gegenstand von Unteransprüchen.

Danach sind der Halter für die Überbrückungsfeder und die wenigstens eine Ladekontaktfeder sowie die Überbrückungsfeder und die jeweilige Ladekontaktfeder selbst in der Weise ausgebildet, dass die Überbrückungsfeder und die jeweiligen Ladekontaktfedern einfach auf den Halter aufschnappbar sind. Ferner ist der Halter als ein Kunststoffteil gefertigt, um Kurzschlüsse zwischen den elektrischen Kontakten ohne weitere Maßnahmen auszuschließen. Außerdem lässt sich ein solches Kunststoffteil leicht als Spritzgussteil herstellen.

Nachfolgend wird ein Ausführungsbeispiel der Erfindung anhand einer Zeichnung näher erläutert. Darin zeigen:
- Figur 1: eine Realisierungsmöglichkeit für das Vorsehen von elektrischen Kontakten für Stromversorgungszellen eines elektrotechnischen Gerätes gemäß dem Stand der Technik,
- Figur 2: eine Explosionsdarstellung von Teilen zur Bildung eines Moduls gemäß der Erfindung für das Vorsehen von elektrischen Kontakten für Stromversorgungszellen eines elektrotechnischen Gerätes, und
- Figur 3: ein montiertes Modul gemäß der Erfindung für das Vorsehen von elektrischen Kontakten für Stromversorgungszellen eines elektrotechnischen Gerätes.

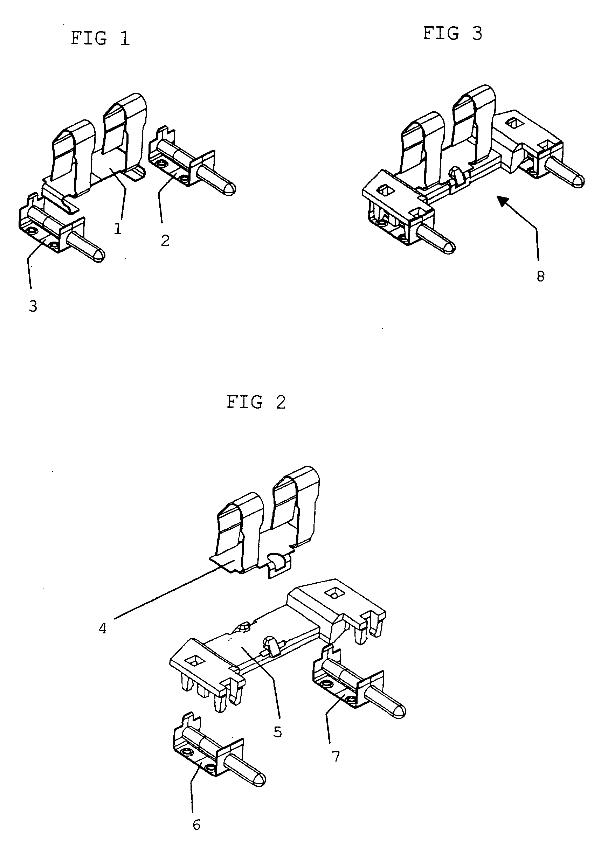

In der Figur 1 ist eine Überbrückungsfeder 1 zu sehen, der zwei einzelne Ladekontaktfedern 2 und 3 beigeordnet sind. Die Überbrückungsfeder 1 bildet einen Kontakt zwischen zwei hintereinander zu schaltende Stromversorgungszellen in einem elektrotechnischen Gerät. Mittels der Ladekontakte 2 und 3 können die Stromversorgungszellen, sofern es sich hierbei um Akkumulatoren handelt, gleich innerhalb des elektrotechnischen Gerätes geladen werden. Möglich wäre auch, dass über diese elektrischen Kontakte zusätzlich oder alleine eine externe Stromzuführung für das vorliegende elektrotechnische Gerät realisiert ist.

Unabhängig von der Funktion der jeweiligen Einzelteile müssen diese Einzelteile bei ihrer Montage auch jeweils einzeln gesetzt werden, wofür jeweilig Montagezeit aber auch jeweilig ein angepasstes Werkzeug benötigt wird.

In der Figur 2 sind eine Überbrückungsfeder 4, ein Halter 5 und 2 Ladekontaktfedern 6 und 7 zusehen. Bei einem gesonderten Verfahrensablauf, z. B. parallel zum Ablauf der Hauptmontage eines betreffenden elektrotechnischen Gerätes, in dem diese Teile benötigt werden, werden die Überbrückungsfeder 4 und die Ladekontaktfedern 6 und 7 mit dem Halter 5 zusammen montiert, so dass sich letztendlich ein Modul 8 ergibt, wie es in der Figur 3 gezeigt ist. Ein derartiges Modul 8 kann dann zur gegebenen Zeit bei der Hauptmontage des betreffenden Gerätes in einem einzigen Arbeitsgang in das betreffende Gerät montiert werden.

Die einzelnen Federn 6 und 7 in der Figur 2 werden bei deren Montage auf dem Halter 5 vorzugsweise einfach auf dem Halter 5 verrastet. Hierfür sind an dem Halter 5 entsprechende Ausarbeitungen z. B. in Form von Haltenasen bzw. Klemmbacken vorgesehen.

## Patentansprüche

1. Verfahren für das Vorsehen von elektrischen Kontakten für Stromversorgungszellen, die eine Stromversorgung für ein elektrotechnisches Gerät bilden und die von den elektrischen Kontakten solche elektrischen Kontakte beanspruchen, die für hintereinander geschaltete einzelne Stromversorgungszellen eine Überbrückung zwischen den einzelnen hintereinander geschalteten Stromversorgungszellen bilden und die für Ladevorgänge der Stromversorgungszellen Ladekontakte bilden, **dadurch gekennzeichnet, dass** eine Überbrückungsfeder (4) und wenigstens eine Ladekontaktfeder (6; 7) auf einen Halter (5) montiert werden, und dass die Kombination aus Überbrückungsfeder (4), wenigstens einer Ladekontaktfeder (6; 7) und Halter (5) in einem Arbeitsgang an eine vorgegebene Stelle innerhalb des elektrotechnischen Gerätes bei dessen Montage platziert werden.

2. Verfahren nach Anspruch 1, **dadurch gekennzeichnet, dass** bei der Montage der Überbrückungsfeder (4) und der wenigstens einen Ladekontaktfeder (6; 7) auf den Halter (5) die Überbrückungsfeder (4) und die wenigstens eine Ladekontaktfeder (6; 7) auf den Halter (5) aufgeschnappt werden.

3. Vorrichtung für das Vorsehen von elektrischen Kontakten für Stromversorgungszellen, die eine Stromversorgung eines elektrotechnischen Gerätes bilden und die von den elektrischen Kontakten solche Kontakte beanspruchen, die für hintereinander geschaltete einzelne Stromversorgungszellen eine Überbrückung zwischen den einzelnen hintereinander geschalteten Stromversorgungszellen bilden und die für Ladevorgänge der Stromversorgungszellen Ladekontakte bilden, **dadurch gekennzeichnet, dass** eine Überbrückungsfeder (4), wenigstens eine Ladekontaktfeder (6; 7) und ein Halter (5) zum Halten der Überbrückungsfeder (4) und der wenigstens einen Ladekontaktfeder (6; 7) als ein einstückiges Modul (8) ausgebildet sind.
